# EUROPEAN PATENT APPLICATION

(11) **EP 1 359 522 A1**
(43) Date of publication of application: **05.11.2003**
(21) Application number: 01273611.2
(22) Date of filing: 28.12.2001
(51) Int. Cl.: G06F 17/60

(54) **BOOK ON-DEMAND SYSTEM FOR CREATING PAGE DATA USING CONTENT DATABASE**

(30) Priority: 29.01.2001 JP 2001001983
(71) Applicant: Foursis Business Promotion Kabushiki Kaisha, Tokyo 101-0045 (JP)
(72) Inventor: NAKANISHI, Naoya c/o Foursis Bus. Promotion K. K., Tokyo 101-0045 (JP); TOYOTA, Yuichi c/o Kabushiki Kaisha CCP, Tokyo 104-0031 (JP)
(74) Representative: Klunker . Schmitt-Nilson . Hirsch
(86) International application number: JP0111664
(87) International publication number: WO02061645

(57) **Abstract**

Contents and layout information are selected from a content server, page data are created, charging is carried out at the output time, plural content servers provide contents, and a desired number of copies of page data are allowed to be output at any user terminal even when the number of copies is small.

A system for allowing a user to connect to a computer network for access from a user terminal is equipped with a content server having a content database for storing contents and a layout database for storing layout information for arranging desired contents, and a commerce server for carrying out charging management. Page data are created in connection with the processing of selecting one or plural desired contents at the user terminal from the content database, the processing of selecting desired layout information from the layout database, the processing of downloading contents and layout information, and the processing of carrying out layout on the basis of the layout information indicated from the user terminal, and the page data thus created are output, resulting in execution of the charging processing.

## Description

### Technical Field

The present invention relates to a book on-demand system for downloading an image file, other contents and layout information by users through a computer network represented by the Internet or the like, making a layout on the basis of desired layout information to create page data, and outputting the page data thus created.

### Background Art

Businesses such as commercial activities, etc. represented by the Internet have been recently activated in connection with the developments of computer networks and communication environments. A large number of web sites such as shopping molls, auctions, etc. exist, and various techniques for payment methods have been also developed in connection with these businesses.

Furthermore, information home electric appliances such as portable information terminals, cellular phones, PHS, Internet TVs, game machines, etc. as well as information equipment such as personal computers have been widely popular. There has appeared one type of cellular phones each having a browser function to enable a user to watch/listen to Web pages of the Internet from a cellular phone terminal.

Under such a situation, users have been allowed to access various contents through a computer network to watch/listen to contents, output the contents by print or achieve the contents by download, and requirements for techniques on counter values for on-line achievement of contents and copyright (or copyright license fee) have been rapidly increased. Furthermore, there has been developed such a system as to enable various contents such as music pieces to be distributed or watched/listened to through an electronic network.

There have been also developed a means for charging in connection with the distribution or watching/listening of various contents or the like, a technique of compressing information to be distributed, an encrypting technique for protecting copyright, privacy information, etc., and a user interface for enable users to use the system with a simple operation.

If such problems as the charging processing, etc. are cleared, it is convenient for content users and also content suppliers to allow use of various contents.

Furthermore, if a user can freely select any content, freely lay out the content and output the content in the form of a printed matter such as a publication, a document containing a small pamphlet, a poster, a pamphlet, an advertising catalo, a post card, a letter, various kinds of documents, other edited print-style media, etc., the convenience can be dramatically enhanced from the viewpoint of labor, cost and also manufacturing time.

As such a prior art, JP-A-2000-67138 titled "ON-DEMAND FORMS DISTRIBUTING/ISSUING SYSTEM" discloses a technique of collectively managing paper forms and electronic forms thereof to enhance the efficiency of various kinds of petition proceedings and also allow the forms to be achieved on-demand.

According to the present invention, forms used for the various kinds of petition proceedings, forms associated with the respective proceedings and data on attributes for associating these forms with one another are stored in a form database, a user assist navigation portion has a function of searching a required form and an associated form from the form database in response to a request input from a user terminal through the Internet, displaying the forms on a screen of the terminal, and assisting the operations from a form fill-in operation until a created-form submitting operation, and an issuing system portion has a function of receiving the fill-in data from a transaction database, receiving information on the form style data of a form and the fill-in position of the form from the form database, combining both the fill-in data and the information to form a form added with the information, and issuing the form added with the information in a paper form or digital form.

However, according to this invention, a desired form can be issued. However, this invention does not disclose any control technique in which if a user outputs a content, the charging processing at this time would be carried out, however, if the user does not output any content, the use of the content is restricted. Accordingly, copyright, etc. are not protected, and there occurs any trouble in supply or distribution of contents.

In addition, in order to carry out the charging processing in accordance with the size, resolution, output method, etc. of each content when the charging is carried out or in order to protect the content when no charging processing is carried out (the content is not output or the like), the use of the content is required to be restricted.

If there can be constructed such a system that the charging processing is efficiently carried out in accordance with the size, resolution, output method, etc. of the content and also a content user can indicate the size, resolution, output method, etc. of the content at the time when the charging processing is carried out, this would be more convenience for users.

Furthermore, JP-A-11-352598 titled "PRINT PHOTOGRAPHIC PROCESSING METHOD USING INTERNET AND LABORATORY SYSTEM" discloses a technique for supplying a print photographic processing method using the Internet and a laboratory system.

According to this invention, a laboratory system develops films, adds the films with IDs unique to all laboratory systems and accumulates them as image data. The laboratory system prints image data accumulated in any laboratory system connected to the Internet. As described above, according to this invention, the laboratory system accumulates image data, the image data are managed on the basis of IDs unique among all the laboratory systems, and the laboratory systems are connected to one another through the Internet. Therefore, a user who is given permission from an owner of image data can print the image data by any laboratory system.

However, like the above cases, this invention never discloses a control technique in which the charging processing is carried out at the time point when a user outputs a content, and if the content is not output, use of the content is restricted. Accordingly, this invention does not protect copyright, etc., and some trouble occurs in supply and distribution of contents.

In addition, in order to carry out the charging processing in accordance with the size, resolution, output method, etc. of each content when the charging is carried out or in order to protect the content when no charging processing is carried out (the content is not output or the like), the use of the content is required to be restricted.

If there can be constructed such a system that the charging processing is efficiently carried out in accordance with the size, resolution, output method, etc. of the content and also a content user can indicate the size, resolution, output method, etc. of the content at the time when the charging processing is carried out, this would be more convenience for users.

Furthermore, JP-A-11-161673 titled "CATALOGUE CREATING SYSTEM" discloses a technique of shortening the time needed to create a catalogue.

Catalogue data for creating a catalogue at a WWW server connected to the Internet are collectively managed as a catalogue database, and also when a personal computer is connected to the WWW server from a browser of the computer, the catalogue database is operated in accordance with an input content on a predetermined input screen while displaying the input screen. Therefore, there can be provided a catalogue creating system in which the contents of the catalogue database can be jointly used on a real-time basis and catalogues can be easily created in short time.

However, like the above cases, this invention never discloses a control technique in which the charging processing is carried out at the time point when a user outputs a content, and if the content is not output, use of the content is restricted. Accordingly, this invention does not protect copyright, etc., and some trouble occurs in supply and distribution of contents.

In addition, in order to carry out the charging processing in accordance with the size, resolution, output method, etc. of each content when the charging is carried out or in order to protect the content when no charging processing is carried out (the content is not output or the like), the use of the content is required to be restricted.

If there can be constructed such a system that the charging processing is efficiently carried out in accordance with the size, resolution, output method, etc. of the content and also a content user can indicate the size, resolution, output method, etc. of the content at the time when the charging processing is carried out, this would be more convenience for users.

Furthermore, JP-A-10-254744 titled "PRINT DATA MANAGING SYSTEM AND PRINT DATA MANAGING METHOD" discloses a technique for supplying a print data managing system for enabling a process of automatically setting and surely storing proper print data from a storage device set on a network in a manufacturing process of print matters, fetching required edition data to an edition work terminal, and storing process management information on the edition work as a database.

The print data managing system and the print data managing method has a storage means for packing print material data with relating data and storing the data thus packed as an object in a managing system for storing and managing data constituting print matters as a database.

However, like the above cases, this invention never discloses a control technique in which the charging processing is carried out at the time point when a user outputs a content, and if the content is not output, use of the content is restricted. Accordingly, this invention does not protect copyright, etc., and some trouble occurs in supply and distribution of contents.

In addition, in order to carry out the charging processing in accordance with the size, resolution, output method, etc. of each content when the charging is carried out or in order to protect the content when no charging processing is carried out (the content is not output or the like), the use of the content is required to be restricted.

If there can be constructed such a system that the charging processing is efficiently carried out in accordance with the size, resolution, output method, etc. of the content and also a content user can indicate the size, resolution, output method, etc. of the content at the time when the charging processing is carried out, this would be more convenience for users.

Furthermore, in this invention, in order for a user to fetch required edition data to the edition work terminal and carry out an edition work on the data to achieve a desired layout, the user himself/herself must carry out a cumbersome work of editing the layout at the edition work terminal.

If the edition processing described above is automatically carried out on the basis of a content and lay-out information at a user terminal by selecting the layout information and downloading the data, the cumbersome work can be excluded, and also the edition processing can be performed with a simple operation in short time, and this is convenient.

Furthermore, as a technique relating to the charging processing at the print time, JP-A-11-119937 titled "NETWORK PRINTER" discloses a technique of enabling accurate charging management in a network printer adapted for multi-protocol.

According to this invention, the charging management can be more surely performed by equipping a network printer with a network adapter having a communication protocol portion for receiving communication print data of multi-protocol containing charging information and print target data, a communication application portion for adding a print processing command to the communication print data and outputting them, and a charging management protocol selecting means for outputting only a communication protocol selected by a a user and the communication print data in the communication application when the charging management is carried out, a controller for receiving and outputting the communication print data output from the network adapter, a print portion for printing the print target data and a charging management portion for achieving charging information from the print portion.

As descried above, the network printer that can perform the charging management is implemented by using the multi-protocol communication print data containing the charging information and the print target data. However, this invention never discloses any technique in which the charging processing is efficiently carried out in accordance with the size, resolution, output method, etc. of a content and a content user can indicate the size, resolution, output method, etc. of the content at the time point when the charging processing is carried out, any data structure of the content therefore, and any technique for charging using content data.

Therefore, in order to solve the above problems, an object of the present invention is to provide a book on-demand system for allowing a user to search/extract/select a desired content, select layout information to create page data, download the layout information, carry out charging processing at the time point when the page data are created and output or the like, and carrying out the charging processing in accordance with the size, resolution, output method, etc. of a content when the charging is carried out or protecting the content when the content is not output (that is, neither download nor output is carried out).

Particularly, a system which can supply contents usable by one or plural content servers is constructed by using contents having a data format based on a predetermined format suitable to carry out the charging processing, and also there is provided a system that enables a desired number of copies of page data to be output at any user terminal connected to a computer network even when the number of copies is small.

Furthermore, the present invention has an object to provide a system that can carry out automatic edition processing on the basis of a content and layout information at a user terminal by selecting and downloading the layout information. According to this system, a cumbersome work can be excluded, and the edition processing can be performed with an easy operation in short time.

### SUMMARY OF THE INVENTION

In order to solve the above problems, according to the invention of claim 1, there is provided a book on-demand system for allowing a user to connect from a user terminal to a computer network for access, characterized by comprising:
a content server having a content database for storing contents, and a layout database for storing layout information to arrange desired contents by a user; and
a commerce server for carrying out charging management, wherein page data are created by a step of selecting one or plural desired contents from the content database at a user terminal, a step of selecting desired layout information from the layout database, a step of downloading the contents and the layout information, and a step of carrying out layout on the basis of the layout information indicated from the user terminal, and the charging processing is carried out when the page data thus created are output, whereby contents usable by one or plural content servers are provided, a desired number of copies of page data can be output at any user terminal connected to a computer network.

In order to solve the above problems, according to the invention of claim 2, the book on-demand system of claim 1 is characterized in that the step of generating the page data by the step of carrying out the layout on the basis of the layout information at the user terminal generates the page data through automatic edition processing based on the content and the layout information by automatic edition means equipped to the user terminal.

Furthermore, in order to solve the above problems, according to the invention of claim 3, the book on-demand system of claim 1 or 2 is characterized in that the content database and the layout information database are mounted in different servers.

In order to solve the above problems, according to the invention of claim 4, the book on-demand system of any of claims 1 to 3 is characterized in that the one or plural content servers can be set up on a computer network by unspecified persons by storing contents based on a data format containing data for carrying out the charging processing therein.

In order to solve the above problems, according to the invention of claim 5, the book on-demand system of any one of claims 1 to 4 is characterized in that when the charging processing is carried out in accordance with output of the page data created, the content is decoded at the user terminal.

In order to solve the above problems, according to the invention of claim 6, the book on-demand system of any one of claims 1 to 5 is characterized in that the content is a content that is encoded on the basis of a unique format so as to be decodable with a decode key.

In order to solve the above problems, according to the invention of claim 7, the book on-demand system of claim 6 is characterized in that the content contains attribute information to control use of the content, and the control of restricting use of the content is released by using the decode key to decode the content.

In order to attain the above problems, according to the invention of claim 8, the book on-demand system of any one of claims 6 or 7 is characterized in that the content is subjected to decoding and charging by indicating one or plural use conditions of an output method, the size, resolution, copy number of a content to be output, and other conditions.

In order to solve the problems, according to the invention according to claim 9, the book on-demand system of any one of claims 6 to 8 is characterized in that the content contains sample data of the content, content main body data, charging information on a counter value for use of the content, attribute information on control of the content use, and a unique ID for identifying the content.

In order to solve the above problems, according to the invention of claim 10, the book on-demand system of any one of claims 6 to 8 is characterized in that the content contains sample data of the content, URL information indicating the location of the content main body, charging information on a counter value for use of the content, attribute information on control of the content use, and a unique ID for identifying the content.

In order to solve the above problems, according to the invention of claim 11, the book on-demand system of any one of claims 6 to 8 is characterized in that the content contains sample data of the content, a content location ID for identifying the location of the content main body on a network, charging information on a counter value for use of the content, attribute information on control of the content use, and a unique ID for identifying the content.

In order to solve the above problems, according to the invention of claim 12, the book on-demand system of any one of claims 1 to 11 is characterized in that the step of selecting a desired layout and selecting a desired content from the contents by the user is carried out by carrying out search and extraction processing based on a keyword or content ID from the contents stored in the content database and then carrying out the selection step.

In order to solve the above problems, according to the invention of claim 13, the book on-demand system of any one of claims 1 to 12 is characterized in that the step of selecting a desired layout and selecting a desired content from the contents by the user is carried out by carrying out the processing of watching/listening to sample data of a content stored in the content database and then carrying out the selection step.

In order to solve the above problems, according to the invention of claim 14, the book on-demand system of any one of claims 1 to 13 is characterized in that in a step of authenticating a user when charging processing is carried out in accordance with the output of the page data created, authentication is carried out by using a hardware key equipped to the user terminal.

In order to solve the above problems, according to the invention of claim 15, a content charging system of claim 14 is characterized in that a content output shop terminal supplied by a system manager side is connected to a computer network, and page data containing contents can be output by equipping an authentication key by the user to the content output shop terminal.

In order to solve the above problems, according to the invention of claim 16, the book on-demand system of any one of claims 1 to 15 is characterized in that data of a content comprising one or a combination of plurality of character information, image information, moving picture information, audio information, layout information and other information is contained in a content stored in the content server.

In order to solve the above problems, according to the invention of claim 17, the book on-demand system of any one of claims 1 to 15 is characterized in that a content stored in the content server contains data of an image content which can be compressed or enlarged by using a three-dimensional vector indicating a vertical dimension, a horizontal dimension and brightness.

### BRIEF DESCRIPTION OF THE DRAWINGS

Fig. 1 is a system architecture diagram showing an example of the basic system construction of a content charging system according to the present invention;
Fig. 2 is a system block diagram showing the basic construction and function of the system according to the present invention;
Fig. 3 is a schematic diagram showing the processing of accessing the content server from a user terminal to request a content and layout information;
Fig. 4 is a schematic diagram showing the processing when authentication/charging processing is carried out;
Fig. 5 is a schematic diagram showing the relationship between a content used for edition processing and page data for carrying out layout by using the content;
Fig. 6 is a screen image diagram showing an example of a user side screen when layout is edited;
Fig. 7 is a screen image diagram showing an example of a screen image at a user terminal when the charging processing is carried out at the selection and use time of a content;
Fig. 8 is a screen image diagram showing an example of the screen image at the user terminal when the charging processing is carried out at the selection and use time of a content;
Fig. 9 is a screen image diagram showing an example of the screen image at the user terminal when the charging processing is carried out at the selection and use time of a content;
Fig. 10 is a screen image diagram showing an example of the screen image at the user terminal when the charging processing is carried out at the selection and use time of a content;
Fig. 11 is a flowchart showing an example of the basic processing flow when the content is selected and used;
Fig. 12 is a flowchart showing an example of the basic processing flow when the content is selected and used;
Fig. 13 is a flowchart showing an example of the basic processing flow when the content is selected and used;
Fig. 14 is a data structure diagram showing an example of a content data structure containing sample data of a content, data of the content, charging information on counter value information of the content, and a unique ID for identifying the content;
Fig. 15 is a data structure diagram showing an example of the content data structure containing sample data of a content, URL information indicating the location of the content, charging information on counter value information of the content, and a unique ID for identifying the content;
Fig. 16 is a data structure diagram showing an example of the content data structure containing sample data of a content, a content location ID for identifying the location of the content on a network, charging information on counter value information of the content, and a unique ID for identifying the content;
Fig. 17 is a diagram showing information set in an IC chip of USB when a USB key is used as an example of an authentication key;
Fig. 18 is a flowchart showing the basic processing flow when charging at the content output time is carried out on the basis of use request information;
Fig. 19 is a flowchart showing the basic processing flow when the charging at the content output time is carried out on the basis of the use request information;
Fig. 20 is a flowchart showing the details of the authentication processing;
Fig. 21 is a flowchart showing the details of the charging processing; and
Fig. 22 is a block diagram showing an example of data flow through which attribute information contained in an image content downloaded by a user terminal is detected and interpreted at the user terminal, and data are output according to the attribute information on control of the use of the content.

### BEST MODES FOR CARRYING OUT THE INVENTION

Embodiments according to the present invention will be described with reference to the accompanying drawings.

The present invention relates to a system in which a user connects from a user terminal to a computer network for access, and it is equipped with a content database for storing contents, and a layout database for storing layout information with which a user arranges desired contents.

Further, the system is equipped with a commerce server for carrying out the charging management of use of contents in cooperation with each database.

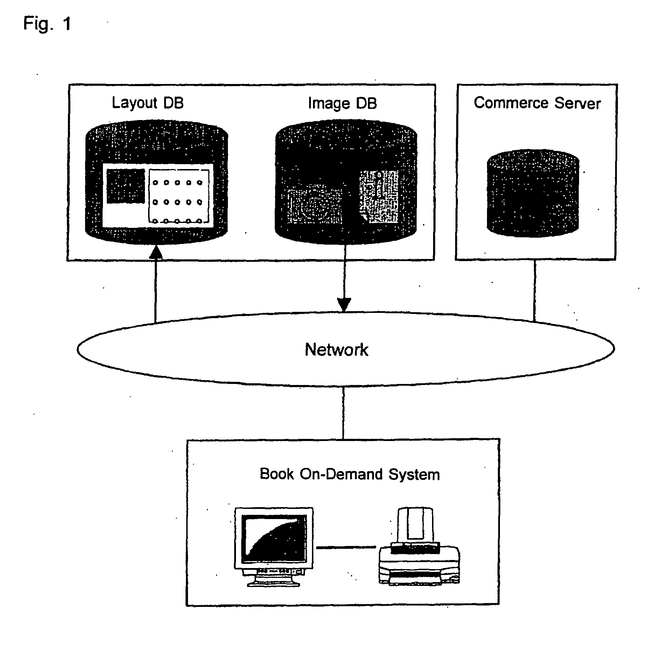

Fig. 1 is a system construction diagram showing an example of the basic system construction of a content charging system according to the present invention.

The content database is a storage device for storing various contents as described above in the system of the present invention in which charging at the content use time is carried out in distribution of contents.

In Fig. 1, an image DB is shown as a content database for storing contents such as image files or the like.

In the present invention, however, in addition to the image files may be contained various other contents such as character information files, moving picture files, audio files, animation image files, a combination of these files, game contents, WEB contents, programs or modules constituting them, databases, etc. as described later.

The basic hardware construction of the system of the present invention comprises a content database for storing contents such as images, etc. on a computer network, a layout database for storing layout information for arranging desired contents by users, and a commerce server for managing information on users and information on content use/purchase of the users.

Furthermore, the system may be equipped with a large-scale database server, an image accumulating/distributing server, a WEB server, a mail server, an application server, a search server, an authentication server, etc. as occasion demands, and these servers are preferably multiplexed to keep safety as occasion demands.

The foregoing construction is a preferable example, and the construction of the servers may be different if the function of each server described in detail later can be implemented because the location of each server can be specified by URL or the like.

The respective servers such as the content server, the portal WEB server, the commerce server, etc. may exist physically at the same place. However, even when they exist at physically and spatially remote places from one another, the system of the present invention can be implemented in such a situation because the locations of the servers can be specified by URL or the like.

Furthermore, for example, if both the content server and the commerce server can be functioned by a single server or such a function as described above can be implemented, various constructions may be adopted.

Furthermore, there is also assumed such a case that the content database and the layout information database are mounted in different servers like the invention of claim 3.

The invention of claim 4 is characterized in that one or plural content servers can be mounted on the computer network by unspecified persons by storing contents based on a data format containing data for carrying out the charging processing in the servers.

For example, by adopting a predetermined data format adapted for the system of the present invention, various content owners, for example, publishing companies, newspaper publishers, television stations, movie companies, software companies, etc. can mount content servers for supplying contents.

A book on-demand system comprising a user terminal through which a user using contents connects to a computer network for access, and an output means such as a printer or the like which is connected to the user terminal and outputs page data by using contents and layout information is connected to a computer network such as the Internet or the like.

The user terminal comprises a control means for controlling OS and application programs, a storage means for storing the programs, downloaded contents, page data created, etc. as occasion demands, an input/output means and a connection means which are connected to the user terminal or the Internet through a communication line, a display means such as a display or the like, and an input means such as a printer or the like. Users can use the system using the content database and the layout database provided by the system of the present invention by connecting to the Internet through servers.

The feature of the present invention resides in that texts, images and other contents on the content database such as an image DB, et. are digitally composed in accordance with a layout defined in the layout database to generate desired page data. Processing such as book binding can be performed on the basis of the page data thus created, and thus the system is suitable for small-lot production and can output data to paper media such as published matters/printed matters.

In the system of the present invention, the digital print composition of the data in the layout database and the content database is carried out, and driver software for creating page data is mounted in the control means for the user terminal.

The driver software has a function of editing texts in the layout in a column writing style, in a horizontal writing style, in a ruby attaching style, in a suffix attaching style or the like, and generates the orientation and size of sheets to be output in conformity with a user's desired layout. In the invention of claim 2, the processing of generating page data by the processing of carrying out the layout on the basis of the layout information at the user terminal is the processing of generating page data through the automatic edition processing based on the content and the layout information by the automatic editing means equipped to the user terminal. The function of editing the texts in the layout in the column writing style, horizontal writing style, ruby-attached writing style, the suffix-attached writing style or the like and the layout information such as the orientation, size, etc. of sheets to be output are subjected to the automatic edition processing by reading desired layout information downloaded by the user by the automatic editing means.

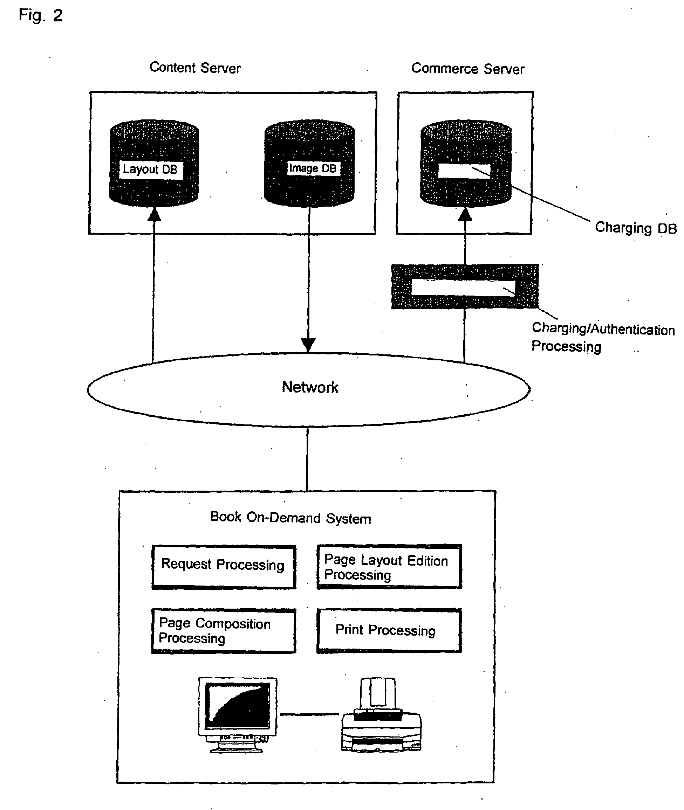

Fig. 2 is a system block diagram showing the basic construction and function of the system according to the present invention.

The system of the present invention carries out the processing phase by phase as described below.
1 Request processing of content/layout information
2 Authentication/charging processing
3 Page generating processing
4 Page layout edition processing
5 Output processing

In these phases, the request processing of content/layout information is replied by the content database and the layout information database in response to a request from a user terminal. The authentication/charging processing is carried out by the commerce server in response to the above processing. The page generating processing and the page layout edition processing, the output processing are carried out at the user terminal side.

As described in the claim 2, the page layout edition processing is based on the automatic edition processing.

The function of the content server contains the following processing.
(1) The content server relays an image distributing service request from a user (browser) to a commerce server.
   The system of the present invention is normally equipped with portal sites which users access to use and purchase contents. A user searches contents, selects a content by watching/listening to sample contents and selects layout information by watching samples of layout information. Consequently, when the user selects a content and layout information to be used, the user downloads them and goes ahead to the authentication and charging processing.
(2) The authentication processing and the charging processing for the user are carried out by the commerce server as described later. However, the content server accepts a processing request from the commerce server and transmits the processing result to the commerce server.
(3) The content server relays a response from the commerce server to a user.
(4) The content server registers, encodes, renews and deletes contents.

The commerce server and the content server are preferably connected to each other in a high-security style.

Furthermore, the system of the present invention is equipped with the commerce server for managing the information on users and the information relating to the use/purchase of contents by the users.

The function of the commerce server contains the following processing.
(1) The commerce server accepts a processing request from the content server, and transmits the processing result to the content server.
(2) The commerce server authenticates users (authentication server function).
(3) The commerce server registers, renews and deletes users.
(4) The commerce server manages the charging information of the image distributing service for users (for example, user ID, use date, image number, image size, resolution, expiration date, output/use method such as print output or the like) (charging server).
(5) the commerce server manages the registration information of the content
(6) the commerce server manages an image distributing service log of each user.

With the above construction, creation of user's desired page data and proper charging processing can be performed by using the book on-demand system of the present invention.

That is, the system of the present invention is characterized in that page data are created by a step of selecting one or plural desired contents from the content database at a user terminal, a step of selecting desired layout information from the layout database, a step of downloading the content and the layout information, and a step of carrying out layout on the basis of the layout information indicated from the user terminal, and the charging processing is carried out in connection with the output of the page data thus created.

Next, contents (images, moving pictures, software, etc) used in the content charging system of the present invention will be described.

The contents used in the present invention contain character data, still picture data, moving picture data, animation video data, presentation data, slide data, audio data, game software, application programs, software, and other data, and comprise the following file formats.

As the file format for still pictures are known JPEG (Joint Photographic Experts Group), PICT (QuickDraw Picture Format), BMP (Bitmap), GIF (Graphics Interchange Format), PNG (Portable Network Graphics), etc.

As the file format for moving pictures are known MPEG-1, MPEG-2, MPEG-4, RV (Real Video), MNG (Multiple-image Network Graphics), AVI (Audio video Interleaved), etc.

As the file format for sounds are known AIFF (Audio Interchange File format), WAV (Waveform), AU, RA (Real Audio), MPEG-1 audio-compression system, MPEG-2 audio-compression system, MPEG-4 audio-compression, etc.

Furthermore, QUICKTIME, MPEG-1, MPEG-2PS, etc. are known as file formats based on the multiplexing system for moving pictures and audio, for example.

PDF (Portable Document Format) is known as an example of a document file format, and formats of zip, lzh, etc. are known as an archive-function-attached compression file format.

Furthermore, the invention of claim 16 is characterized in that in the invention of claims 1 to 15, the contents stored in the content server contain content data comprising one or plural combinations of character information, image information, moving picture information, audio information, layout information, and other information.

For example, a content provider owning digital data of existing published matters, printed matters, etc. can provide contents on-line by using the system of the present invention, and a user can print a small number of copies and carry out the charging processing.

This invention is also characterized in the data format of the contents, and thus any person can serve as a content provider and a content output person without using any special hardware.

The invention of claim 17 is characterized in that the contents stored in the content server contain data of image data which can be reduced and enlarged by using a three-dimensional vector of vertical dimension, horizontal dimension and brightness. Much attention is paid to such a compression/development technique as described above because even when the output size is increased, the quality of the resolution, etc. is not lost, and high-quality data can be output.

Contents can be arranged in a prescribed layout by using such an advantage even in an output manner based on any layout information selected by a user, for example, in a manner of outputting various size matters such as small pamphlets, large-size posters, etc.

Various file formats other than described above may be used.

It has been hitherto general that these files are appended as file header information, etc. with header information of files such as file names, file creating dates, file creators' names, etc. as well as data of contents themselves.

In the present invention, according to the invention of claims 9 to 11, the charging is properly carried out in conformity with the content size, resolution, output method and other detailed conditions particularly by adopting the data structure described below.

Furthermore, the invention of claim 6 is characterized in the content is a content encoded by a unique format which can be decoded by using a decode key.

The invention of claim 7 is characterized in that the content contains attribute information to control use of the content and decoded by releasing the control of restricting the use of the content with the decode key.

### (Embodiment 1 of Content)

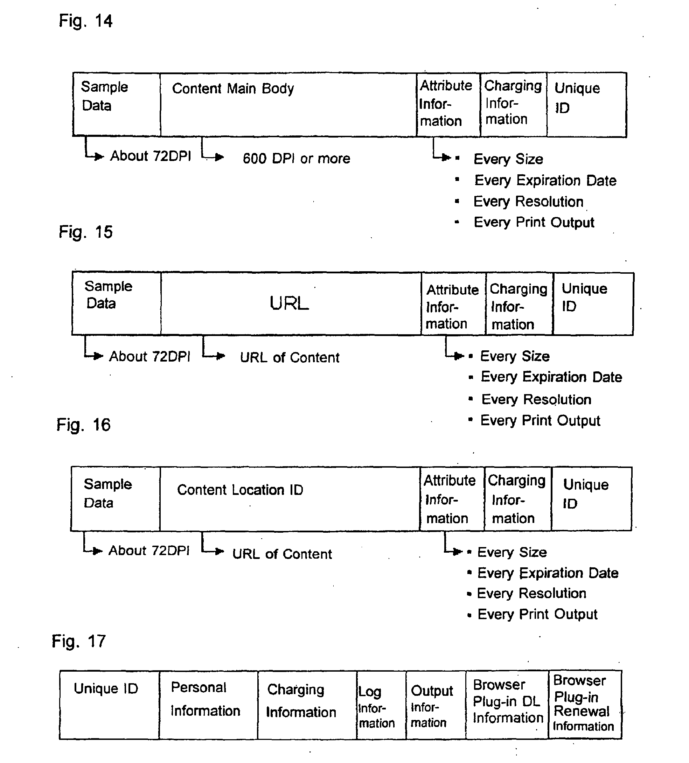

An example of the data structure of the content according to claim 9 is shown in Fig. 14, and it contains sample data of the content, the data of the content main body, charging information on a counter value for use of the content, attribute information on control of the use of the content, and a unique ID for identifying the content.

As a preferable example of the data format, the sample data is an image which is based on the JPEG format and has a resolution of 72dpi or more, and the data of the content main body (in this case, image) is an image which has a resolution of 600dpi or more and is based on an original format.

It has been hitherto general that when contents such as images or the like are displayed on a WEB, they are displayed in small (low resolution) thumb nail style and then the thumb nail of an image to be watched among the thumb nails is clicked or the like to display the content main body such as the image of the thumb nail thus clicked. In this case, different images, that is, the content image and the image of the thumb nail thereof are stored separately from each other.

In this embodiment, these images are collectively managed as single data, a unique ID for making the corresponding content uniquely identifiable from many contents is given to the content, and further the use charge of the content, that is, the charging information which is set every use method such as download or print, every output service or every size or resolution of the content is managed as a single record data.

At least a field containing the sample data, the data of the content main body, the charging information, the attribute information and the unique ID is provided in a single record, and a code indicating an area in which the sample data is located overall, etc., is normally provided when the above data are read out, whereby the various problems described above can be solved by the present invention.

The data structures as the contents according to the other claims of the present invention are the same as described above.

### (Embodiment 2 of Content)

An example of the data structure of the content according to claim 10 is shown in Fig. 15, and it contains the sample data of the content, URL information indicating the location of the content main body, charging information on a counter value for use of the content, attribute information on the control of the use of the content, and a unique ID for identifying the content.

As a preferable example of the data format, the sample data is an image based on the JPEG format and has a resolution of 72dpi or more, and the data of the content main body (in this case, an image) is an image located at a place indicated by URL.

### (Embodiment of Content 3)

An example of the data structure of the content according to claim 11 is shown in Fig. 16, and it contains the sample data of the content, a content location ID for identifying the location of the content main body on the network, charging information on a counter value for use of the content, attribute information on the control of the use of the content and a unique ID for identifying the content.

As a preferable example of the data format, for example, the sample data is an image based on the JPEG format and has a resolution of 72dpi or more, and the data of the content main body (in this case, an image) is an image located at a place indicated by a content location ID. The data of the content location IDs are managed by the database in the storage device such as the database server or the like, and ID allocated to each content and data specifying the location on the network such as URL or LAN at which the content is located are stored in association with each other. The location of the content main body is specified by referring to the database with the content location ID as a key.

In any content according to the claims 9 to 11, the charging information equipped to the content may contain one or plural of the following data: the size, expiration date, resolution, output method and other conditions of the content.

The attribute information on the control of the content use is attribute information for limiting content users to membership or the like, or attribute information for controlling distribution or use of contents.

The content contains various data styles such as image data, moving picture data, animation pictures, audio data, character data, computer game software, computer programs, combinations thereof, etc.

Next, the processing flow of the book on-demand system will be described by using a preferable embodiment.

The processing flow described below is an example, and thus the present invention is not limited to this embodiment.

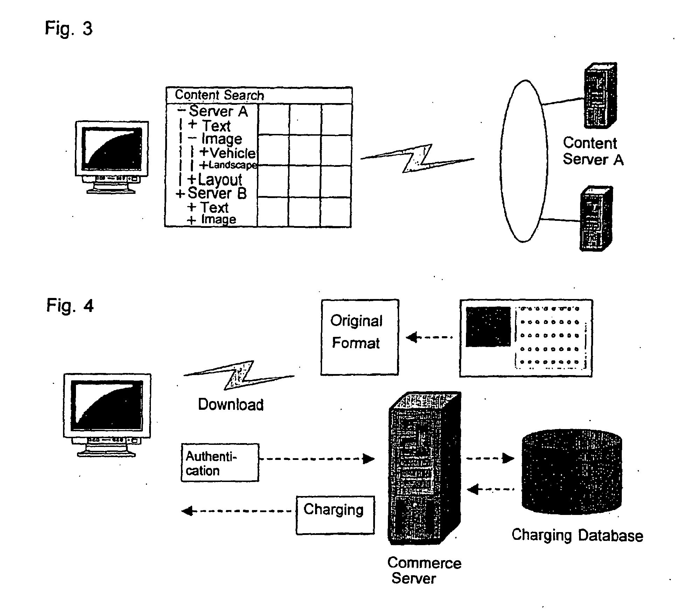

Fig. 3 is a schematic diagram showing the processing of accessing a content server from a user terminal to request a content and layout information.

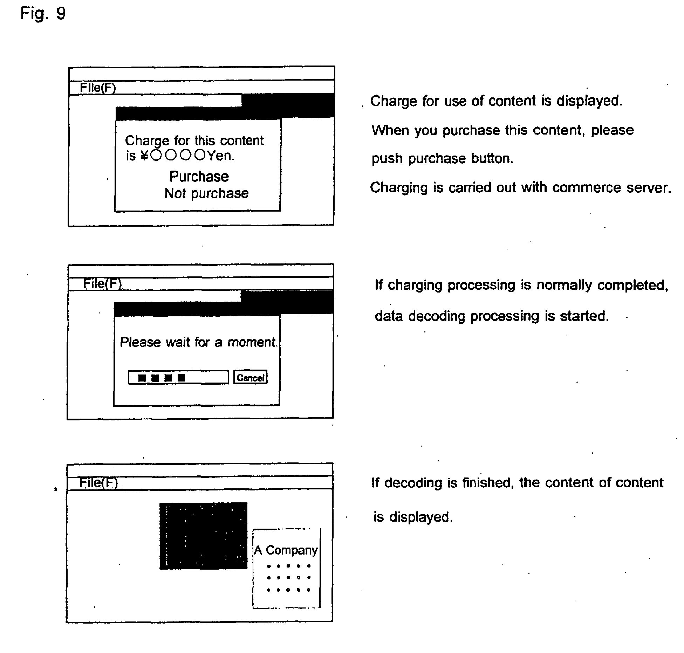

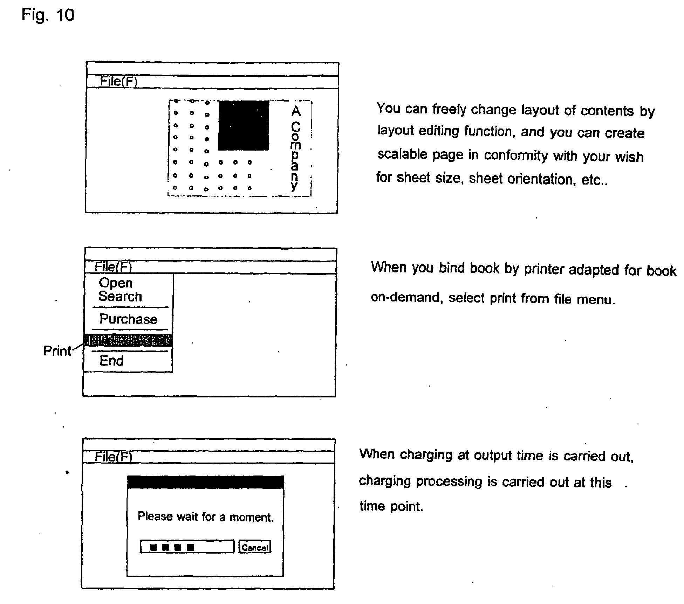

Figs. 7 to 10 are screen image diagrams showing examples of a screen image at the user terminal at the charging processing time when a content is selected and used.

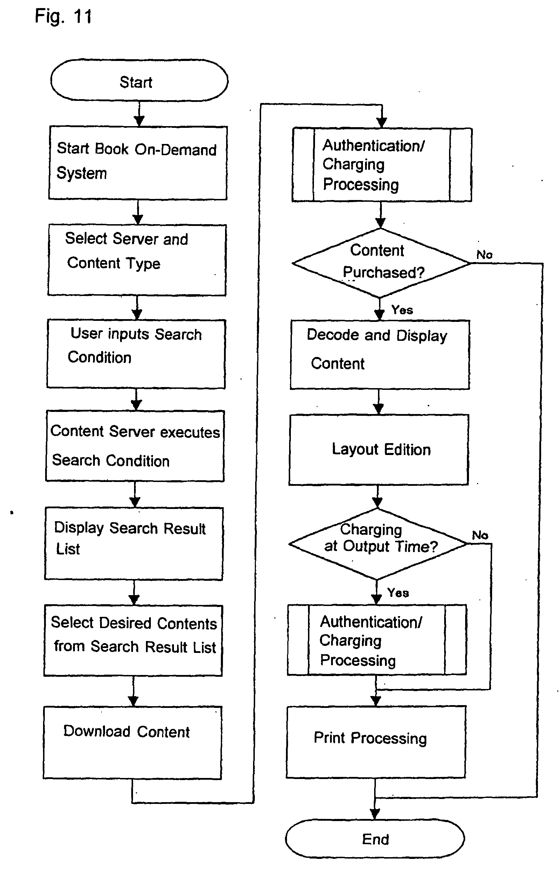

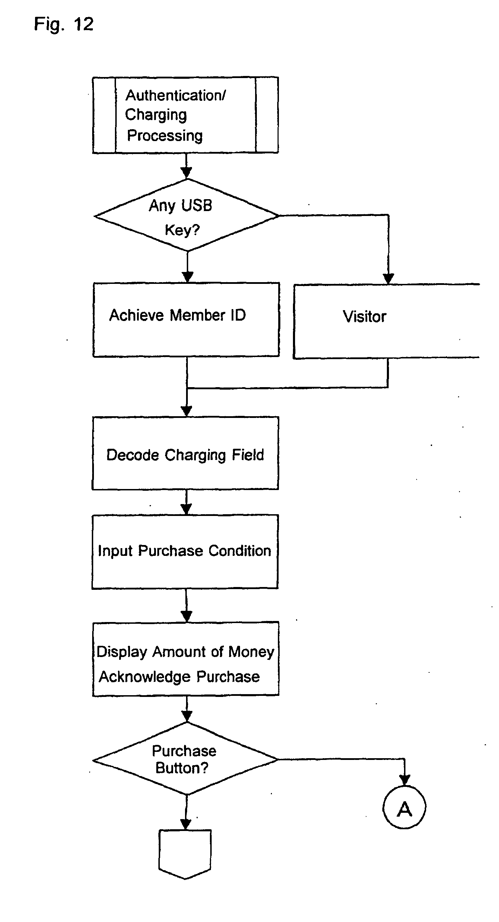

Fig. 11 to 13 are flowcharts showing an example of the basic processing flow when the content is selected and used.

### (Embodiment 1 of Book on-demand system)

First, an authentication key is used when a user makes use of, such as downloads or outputs a content by using the system of the present invention, and thus it is preferable that the user prepares for the authentication key (for example, a USB key or the like) of hardware in advance or when using the system.

ID for identifying the user is set in the authentication key.

Furthermore, attribution information for limiting content users or controlling distribution and use of the content is set.

Fig. 17 is a diagram showing information set in an IC chip of USB when a USB is used as an example of the authentication key.

Information such as unique ID, personal information, charging information, attribute information, log information, output information, etc. is set.

A portal site or the like which the user first accesses normally provides services such as download or output of contents and layout information, and carries out the charging to the use of the system of the present invention. A user who wants to use a content accesses the portal site or the like by inputting URL in a browser equipped to the user terminal connected to the network.

Here, the user terminals contain not only a computer terminal such as a personal computer, but also a portable information terminal such as a cellular phone having a browsing function, a dedicated terminal, a home electric appliance such as WEB-TVs, game machines, etc., and various other kinds of terminals.

At the portal site, membership information is preferably registered for a user who is supplied with services for use of contents. The membership information contains an address, a name, a telephone number, an electronic mail address, a charging (payment) method, and other information.

An authentication key for authentication/content charging described later is issued by the registration and management of the membership information as described above.

In the style that the authentication key is issued on-line, it is preferable that the user inputs the membership information or the like at the portal site to transmit the membership information, the information thus transmitted is stored in the commerce server and examined, and then the authentication key is issued.

The membership is managed in the commerce server.

Registration, renewal and deletion of users are carried out in the commerce server.

Alternatively, like the invention according to claim 13, when a content output shop terminal provided by a system manager side is equipped to be connected to the computer network, the authentication key may be issued at the content output shop by inputting/transmitting information from the content output shop terminal.

When a user uses/purchases a content such as an image or the like at a portal site, the user may select a method of carrying out the charging at the download time or a method of carrying out the charging at the use time. In this case, an embodiment in which the charging is carried out at the time when an output such as print or the like is carried out will be described.

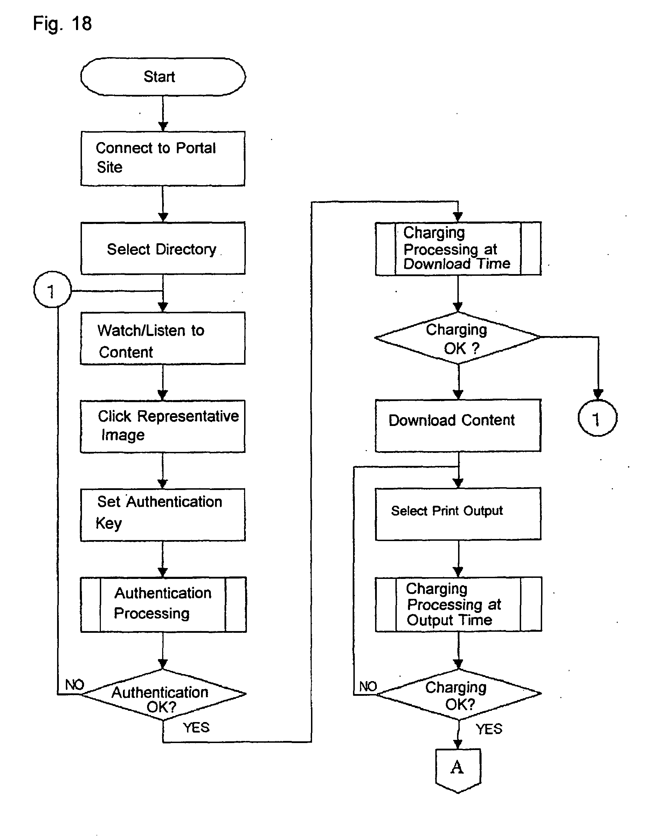

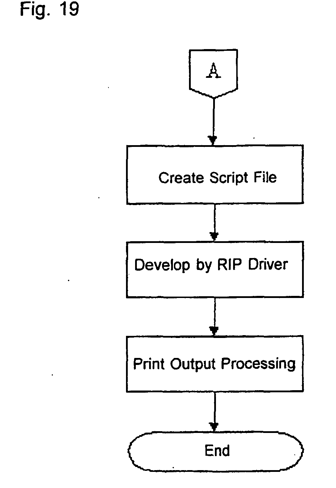

Figs. 18 and 19 are flowcharts showing the basic flow of the processing of carrying out the charging at the output time.

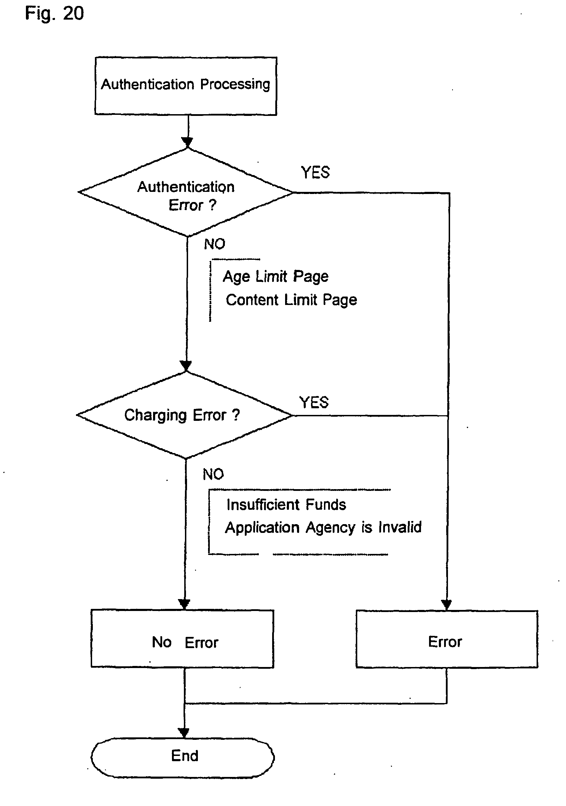

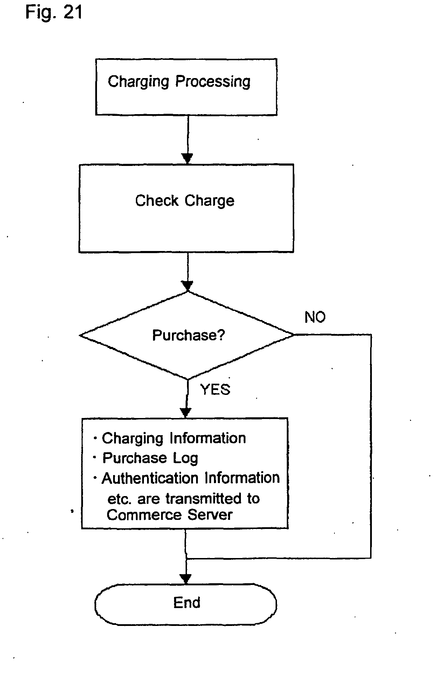

Figs. 20 shows the detailed flow of the authentication processing, and Fig. 21 shows the detailed flow of the charging processing.

As described above, a user who wants to use contents connects to a portal site by inputting URL in a browser equipped to the user terminal connected to the network.

Subsequently, in Figs. 7 and 11, the type of a content server for use of the contents, the types of the contents, etc. are selected. When there are a large number of contents corresponding to desired genre, content, type, etc., the contents are searched on the basis of information such as keywords appended to the contents, content IDs, etc.

Here, the user watches to contents to select user's desired contents from various genres and content formats, and all the contents having any format such as images are set so that the user at the portal site can watch only the sample data of the contents like the thumb nail display in Fig. 8.

That is, only the sample data out of the data contained in the contents described above are displayed on the WEW site.

Furthermore, the user watches layout information to select his/her desired layout information from various layout information.

The contents are stored in the content server, and the commerce server accepts a processing request from the portal site or the like in connection with a user's action such as content selection.

The content server accepts the processing request from the commerce server, and transmits the processing result to the commerce server. The commerce server transmits the processing result to a server for managing the WEB site to display the sample data or the like.

That is, the contents thus selected or the like are searched/extracted (in the invention according to claims 7 to 9, the content registration information owned by the commerce server is referred to on the basis of unique IDs owned by the contents), the corresponding contents stored in the content server are extracted, and the sample data in the corresponding contents are read out. The processing result is transmitted to the commerce server, and the commerce server transmits the processing result to the server for managing the WEB site to display the sample data or the like.

In the case of audio data, sample sounds are output. The commerce server and the content server are connected to each other by a high-security system.

The same processing is carried out on the selection of the layout information.

Registration, renewal and deletion of contents are carried out in the content server.

The commerce server presets content-based charging information (the rule for charging) every size, resolution, expiration date or the like of contents such as images or the like, and the commerce server (charging server) manages the information every user and every content ID.

The charging information of each content is a charging point based on each classification, each attribute, each use method or the like as described below, for example.

That is, it is the charging point based on each content, each content size, each content output size (A0, A1, A2, A3, A4, ..), each resolution, each expiration date, each print output destination, each member, each license contract content, each meter-rate charging, other classification/attribute/use method or the like.

The registration information of contents is managed in the commerce server. The registration information of contents is information for associating the location of each content, the genre of the content, the data format, the creator or owner of the content, the payment destination of charged money and other information with the content ID and stored in the commerce server.

Subsequently, the user selects a download target content from the sample data of the contents which the user has watched or the like, and inputs a use condition to use the content in Fig. 8. That is, the use condition is a content-based condition, a content-size-based condition or the like, and upon selection of a content, the charge of the content is displayed.

Subsequently, the user determines whether the content should be downloaded or not or whether the layout information should be selected and downloaded, and transmits this information. The server for managing the portal WEB site receives the information.

When no download is carried out, the user moves to another WEB page or returns to the preceding page.

When the download is carried out, the following processing is carried out.

The commerce server accepts a processing request form the WEB server for managing the portal sites, and authenticates the user (authentication server function).

The authentication of the charging imposed on the user is preferably carried out by a hardware-based authentication key (for example, USB key or the like). That is, information for authentication is stored in hardware such as a USB key or the like, and set in the user terminal when the charging processing is carried out.

The authentication key for controlling the charging to the user or the content use is set when the user downloads the content.

ID for identifying the user is set in the authentication key (USB key or the like). In the authentication key is set the money used by the user when the charging processing is carried out, or the frequency of available points which are similar to the money.

The authentication key may be further equipped with a password, only-once-limited one-time password, and information for carrying out user authentication according to a system using an open key and a secrete key or other various authentication systems.

When the user uses the content charging system, the user uses points for calculating the money for charging, etc., and as described above, the points are set every content in accordance with the size, resolution, expiration date or the like of each content such as an image or the like.

The information on the user ID stored in the authentication key, the money or the frequency of available points similar to the money which are stored in association with the user ID, etc. can be managed every user by the commerce server (charging server). In this case, by collating both the information, the user authentication and the user-based charging information can be managed.

Subsequently, the commerce server (authentication server) carries out the authentication, judges on the basis of the authentication result whether download, use or the like of a content is permitted. This processing result is transmitted from the commerce server to the WEB server for managing the portal site, and transmits an HTML file for displaying the judgment result on the authentication or the like to the user terminal. That is, the authentication result is displayed on the screen of the user terminal.

Fig. 4 is a schematic diagram showing the processing when the authentication/charging processing is carried out.

When permission based on the authentication is given, an instruction of download with the user terminal indicated as a transmission (download) destination is transmitted from the commerce server to the content server, and the processing can go to the download processing. Before this processing may be added the processing of promoting the user to further check whether the download should be carried out or not.

When these processing steps are cleared, the download processing is carried out.

That is, the processing of referring to the content registration information owned by the commerce server from the unique ID of the content selected or the to extract the corresponding content stored in the content server, reading out the content data in the corresponding content and transmitting (downloading) the content data to the user terminal is executed, and when the charging processing is carried out at the download time, the processing of reading out the corresponding charging information in the corresponding content, transmitting the download (charging) processing result to the commerce server, renewing the information of charging points owned by the authentication key, and transmitting the processing result from the commerce server to the content server to execute the download processing are executed.

It is preferable that available service logs of download, etc. for users are managed in the commerce server.

It is a normal style that contents which the users can watch/listen to before carrying out the download/charging processing of the contents are sample contents described above.

Here, at the stage that the download is carried out, the user achieves a content by downloading the content (that is, not the sample data, but the content main body). In this case, the contents stored in the content server are encoded in a predetermined data format, so that the content main body is protected so that it is impossible to use the content main body.

The content thus downloaded contains the charging information on a counter value for use of the content and the attribute information on control of the content use.

The content used in this invention contains the attribute information for controlling use of the content.

There has been hitherto known a technique in which in order to enable the charging management surely, for example, in a network printer adapted for multi-protocol, communication print data received is made to contain charging information and print target data and the charging is surely managed.

As described above, there has been implemented a network printer in which the charging management can be performed by using the multi-protocol communication print data containing the charging information and the print target data. In this invention, the data of a content is made to contain the charging information for carrying out the charging processing in accordance with the size, resolution, output method or the like of the content, and the attribute information for controlling the distribution/use of the content such as user restriction such as member or non-member, restriction of the output method/frequency or the like,

Here, at the stage that the output such as print or the like is carried out, that is, the charging processing is carried out, the user can output the content by decoding the content (that is, not the sample data, but the content main body).

As described above, the contents stored in the content server are encoded in a predetermined data format, and thus the content server carries out the download processing, and the processing of transmitting the content to the user terminal in response to use request information of a content indicated and transmitted by an authenticated user, and detecting the attribute information contained in the content at the user terminal.

Subsequently, at the user terminal, the user carries out edition processing on the page data by using the content and layout information downloaded.

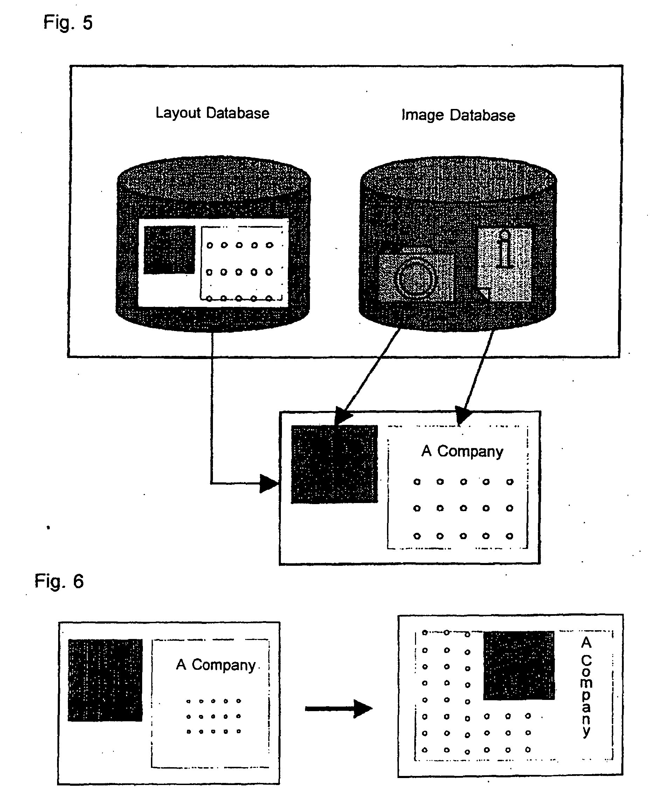

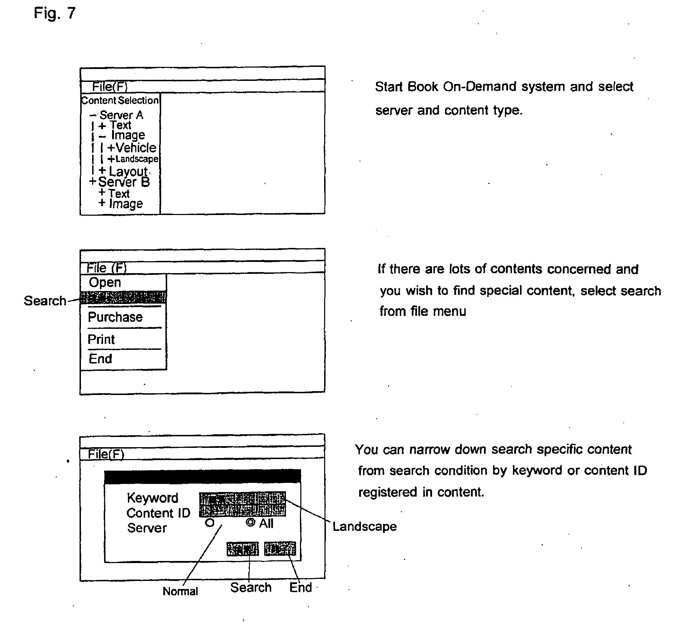

Fig. 5 is a schematic diagram showing the relationship between contents used for the edition processing and page data on which layout is carried out by using the contents.

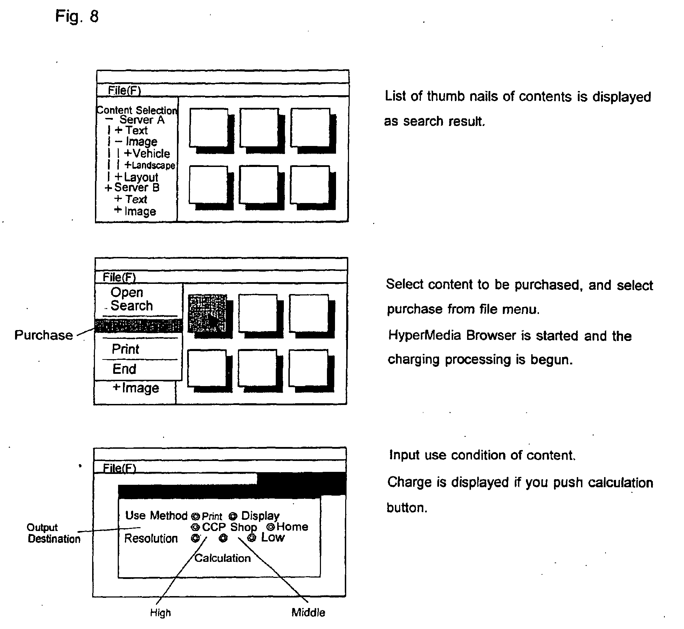

Fig. 6 is a screen image diagram showing an example of a user screen when the layout is edited.

When the charging processing based on the use request information is authenticated and then the content is output, the content is decoded on the basis of the use request information and output, so that the charging at the output time is carried out.

When the charging processing based on the use request information is not authenticated, it is impossible to decode and output the content.

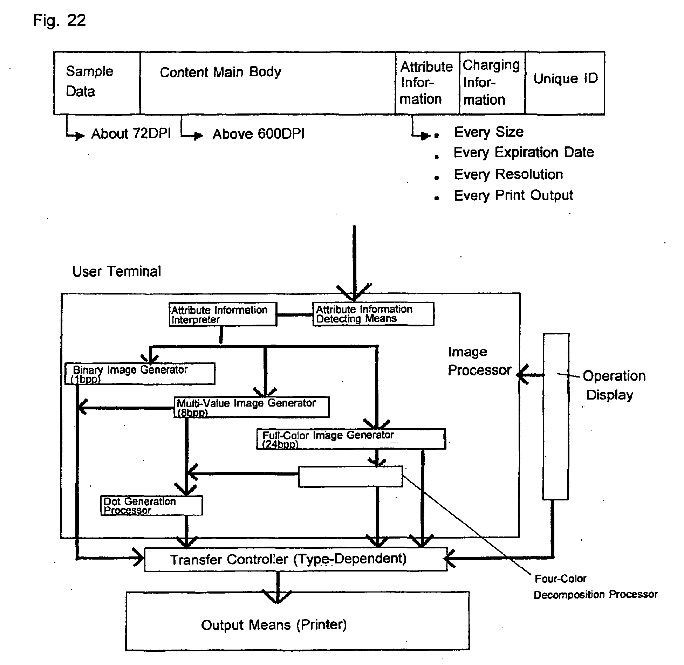

Fig. 22 is a block diagram showing an example of the data flow along which the attribute information contained in an image content is detected and interpreted, and the data is decoded and output according to the attribute information on the control of the content use in the user terminal which downloads the image content.

As described above, it is preferable that the use service log of download, etc. by the user is managed in the commerce server, and the use service log is transmitted from the user terminal to the system side of this invention. This is particularly needed to complete the charging processing under the condition that the output processing such as print or the like is normally carried out.

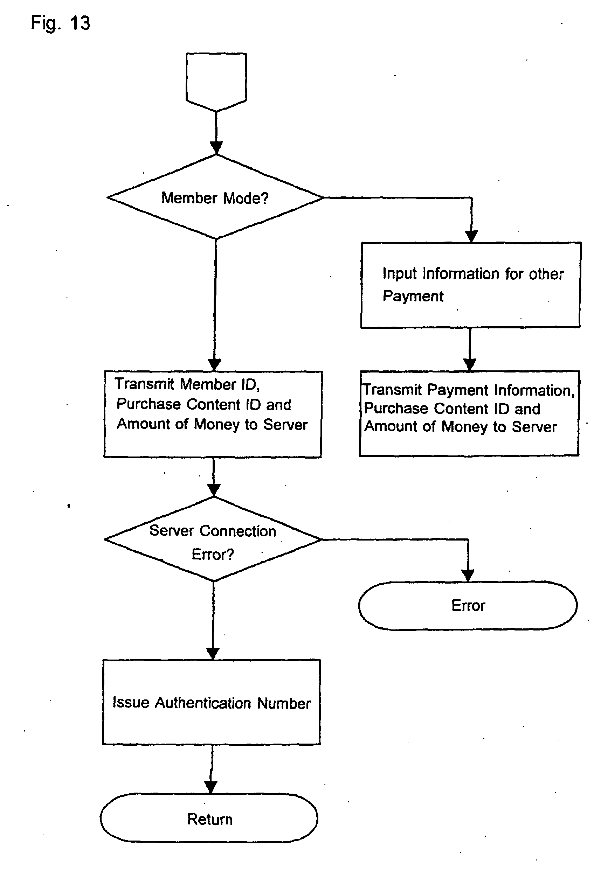

Furthermore, it is judged whether the user has been registered as a member as shown in Fig. 13. In this case, it is preferable that if the user has been registered as a member, the payment method of the member concerned which has been registered is used by using the member ID or the like, or if the user has not been registered as a member, a payment processing method is indicated or the like.

### (Embodiment 2 of Book on-demand system)

Next, the content charging system according to claim 10 will be described.

In this embodiment, the system contains, on a computer network, a content server for storing contents such as images, etc., a portal WEB server which a user accesses to use/purchase contents and a commerce server for managing information on users and users' use/purchase information of contents. Each content contains the sample data of the content, URL information indicating the location of the content main body, charging information on a counter value for the content use, attribute information on the control of the content use and a unique ID for identifying the content.

The charging at the output time is carried out by the processing of displaying a content at the user terminal by a user, the processing of setting an authentication key for controlling the charging to the user and the control of use of the content when the user downloads the content, the processing of authenticating the user accessing the system by using the authentication key, the processing of transmitting the content to the user terminal in response to use request information of the content indicated and transmitted by the authenticated user, and detecting the attribute information contained in the content at the user terminal, the processing of decoding the content on the basis of the use request information when the charging processing based on the use request information is authenticated and the content is output, and outputting the content.

When the charging processing based on the use request information is not authenticated, it is impossible to decode and output the content.

Figs. 18 and 19 are flowcharts showing the basic processing flow when the above decode key is received and the charging at the output time of the content is carried out.

Fig. 20 shows the detailed flow of the authentication processing and Fig. 21 shows the detailed flow of the charging processing.

This embodiment uses a content containing sample data thereof, URL information indicating the location of the content main body, charging information on a counter value for use of the content, attribute information on control of the content use, and a unique ID for identifying the content. The basic processing flow is common to the embodiment 1 of the charging system described above.

In this embodiment, the content is stored in the content server in association with the unique ID of the content registration information managed by the commerce server, however, it contains URL information indicating the location of the content main body in place of the content data contained in the content. Therefore, the data of the content main body must be stored at the place indicated by the URL separately from the content.

The user can watch/listen to or download the content before the reception processing of the decode key. However, the charging processing has not yet been completed at this time point, and thus it is general that the data of the content main body is located at the place indicated by the URL so that only the sample data of the content can be watched/listened to or output, and the content is kept to be restricted in use/output thereof according to the attribute information for controlling the content use which is contained in the content.

Here, at the stage that the output such as print or the like is carried out, that is, the charging processing is carried out, the user is allowed to output the content by decoding the content (that is, not the sample data, but the content main body).

As described above, since the contents stored in the content server are encoded in a predetermined data format, the content server carries out the download processing, and then transmits the content to the user terminal in response to the use request information of the content indicated and transmitted by the authenticated user. The attribute information contained in the content is detected at the user terminal.

When the charging processing based on the use request information is authenticated and the content is output, the charging at the output time is carried out in connection with the processing of decoding the content on the basis of the use request information and outputting the content.

When the charging processing based on the use request information is not authenticated, it is impossible to decode and output the content.

Figs. 18 and 19 are flowcharts showing the basic processing flow when the charging at the output time is carried out in connection with the processing of decoding the content on the basis of the use request information and outputting the content.

Fig. 20 shows the detailed flow of the authentication processing and Fig. 21 shows the detailed flow of the charging processing.

Fig. 22 is a block diagram showing an example of the data flow along which at a user terminal downloading an image content, the attribute information contained in the content is detected and interpreted and the content is decoded and output on the basis of the attribute information on the control of the content use.

As described above, it is preferable that the use service log of download, etc. of a user is managed in the commerce server. The user service log is transmitted from the user terminal to the system side of this invention, and it is particularly needed to complete the charging processing under the condition that the output processing such as print or the like has been normally carried out.

In this embodiment, the content contains the URL information indicating the location of the content main body, so that the data of the content main body is stored at the place indicated by the URL separately from the content.

Therefore, the content particularly contains the following embodiment.

An HTML file, an XML file, a CHTML file or the like which is displayed on WEB (in this case, particularly contains a closed network such as Intranet or the like) is the content itself, and it contains sample data thereof, URL information indicating the location of the content main body, charging information on counter value information of the content, attribute information on control of the content use, and a unique ID for identifying the content.

The content main body exists at the place indicated by URL.

At the tag of a source of a file which uniquely defines, the charging information on the counter value information of the content, the attribute information on the control of the content use, and the unique ID for identifying the content are contained in the file. The unique definition of tag is effective to manage contents in cooperation with the database for storing the content main body particularly in files using XML or the like.

At the content use time, information is transmitted/received between the user terminal and the system of this invention, and at the user terminal side the charging information and attribute information which are defined by the tag are detected, and the charging processing is carried out so that use such as output or the like is allowed. Under this state, the output/use is carried out.

### (Embodiment 3 of Book on-demand system)

Next, the content charging system according to claim 11 will be described.

In this embodiment, the system contains, on a computer network, a content server for storing contents such as images, etc., a portal WEB server which a user accesses to use/purchase contents, and a commerce server for managing information on users and information on use/purchase of contents. The content contains sample data, a content location ID for identifying the location of the content main body on the network, charging information on a counter value for use of the content, attribute information on control of the content use, and a unique ID for identifying the content.

The charging at the output time is carried out in connection with the processing of displaying the content at the user terminal by the user, the processing of setting an authentication key for the charging to the user and the control of the content use when the user downloads the content, the processing of authenticating the user accessing the system by using the authentication key, the processing of transmitting the content to the user terminal in response to the use request information of the content indicated and transmitted by the authenticated user and detecting the attribute information contained in the content at the user terminal, and the processing of decoding the content on the basis of the use request information and outputting the content when the charging processing based on the use request information is authenticated and the content is output.

When the charging processing based on the use request information is not authenticated, it is impossible to decode and output the content.

Fig. 8 is a flowchart showing the basic processing flow when the decode key is received and the charging at the output time of the content is carried out.

In this embodiment, the content contains sample data thereof, a content location ID for identifying the location of the content on the network, charging information on counter value information of the content, attribute information on control of use of the content, and a unique ID for identifying the content. The basic processing flow is common to the embodiment 2. of the charging system.

In this embodiment, the content is stored in the content server in association with the unique ID of the content registration information managed by the commerce server. However, the content contains the content location ID for identifying the location of the content main body on the network in place of the content data contained in the content, and thus the data of the content main body must be stored at the place indicated by the content location ID separately from the content.

The user can watch/listen to or download the content before the reception processing of the decode key. However, at this time point the charging processing has not yet been completed. Therefore, the data of the content main body is located at the place indicated by the content location ID so that only the sample data of the content can be watched/listened to or output, and the use/output of the content is kept to be restricted according to the attribute information for controlling the content use which is contained in the content.

Here, at the stage that the output such as print or the like is carried out, that is, the charging processing is carried out, the user is allowed to output the content by decoding the content (that is, not the sample data, but also the content main body).

As described above, since the content stored in the content server is encoded in a predetermined data format, the content server carries out the download processing, and then transmits the content to the user terminal in response to the use request information of the content indicated and transmitted by the authenticated user, and the attribution information contained in the content is detected at the user terminal.

When the charging processing based on the use request information is authenticated and the content is output, the charging at the output time is carried out in connection with the processing of decoding the content on the basis of the use request information and outputting the content.

When the charging processing based on the use request information is not authenticated, it is impossible to decode and output the content.

Figs. 18 and 19 are flowcharts showing the basic processing flow when the charging at the output time is carried out in connection with the processing of decoding the content on the basis of the use request information and outputting the content.

Fig. 20 shows the detailed flow of the authentication processing, and Fig. 21 shows the detailed flow of the charging processing.

Fig. 22 is a block diagram showing an example of the data flow along which at the user terminal downloading an image content, the attribute information contained in the content is detected and interpreted to decode the content according to the attribute information on the control of the content use and output the content.

As described above, it is preferable that the use service log of download or the like of the user is managed in the commerce server, and the use service log is transmitted from the user terminal to the system side of this invention. The use service log is needed particularly so that the charging processing is completed under the condition that the output processing such as print or the like is normally carried out.

Furthermore, in this embodiment, the content location ID for identifying the location of the content main body on the network is contained, so that the data of the content main body is stored at the place indicated by the content identifier ID separately from the content.

Therefore, the content particularly has the following embodiment.

An HTML file, an XML file, a CHTML file or the like which is displayed on WEB (in this case, particularly contains a closed network such as Intranet or the like) is the content itself, and it contains sample data thereof, URL information indicating the location of the content main body, charging information on counter value information of the content, attribute information on control of the content use, and a unique ID for identifying the content.

The content main body exists at the place indicated by the content indentifier ID.

At the tag of a source of a file which uniquely defines, the charging information on the counter value information of the content, the attribute information on the control of the content use, and the unique ID for identifying the content are contained in the file. The unique definition of tag is effective to manage contents in cooperation with the database for storing the content main body particularly in files using XML or the like.

At the content use time, information is transmitted/received between the user terminal and the system of this invention, and at the user terminal side the charging information and attribute information which are defined by the tag are detected, and the charging processing is carried out so that use such as output or the like is allowed. Under this state, the output/use is carried out.

In any case, the content output method contains a case of output using a printer connected to the user terminal, a case of output to an external storage device equipped to the user terminal or connected to the user terminal, or other output methods.

### (Embodiment 4 of Charging System)

Next, in the invention according to claim 15, the system is further equipped with a content output shop terminal supplied by the system manager side while the content output shop terminal is connected to the computer network, and the user sets the authentication key to the content output shop terminal so that the page data containing the content can be output therefrom.

Since an authentication key comprising hardware such as a USB key or the like is used, the output such as print or the like can be carried out from the content output shop by appending (or purchasing) the authentication key. The processing flow until the output is common to each of the embodiments described above.

### INDUSTRIAL APPLICABILITY

As described above, according to this invention, there can be provided a book on-demand system in which the charging processing is carried out at the time point when the user searches/extracts/selects desired contents, and selects and downloads layout information to create and output page data, and also the charging processing is carried out in accordance with the size, resolution, output method or the like of the content when the charging is carried out, or the content is protected when no charging processing is carried out (that is, when neither download nor output is carried out).

Particularly, by using the contents having the data format of a predetermined format to carry out the charging processing, a system in which one or plural content servers can provide usable contents can be constructed, and further at any user terminal connected to a computer network, a desired number of copies of page data can be output even when the number is small.

## Claims

1. A book on-demand system for allowing a user to connect from a user terminal to a computer network for access, **characterized by** comprising:
a content server having a content database for storing contents, and a layout database for storing layout information to arrange desired contents by a user; and
a commerce server for carrying out charging management, wherein page data are created by a step of selecting one or plural desired contents from the content database at a user terminal, a step of selecting desired layout information from the layout database, a step of downloading the contents and the layout information, and a step of carrying out layout on the basis of the layout information indicated from the user terminal, and the charging processing is carried out when the page data thus created are output, whereby contents usable by one or plural content servers are provided, a desired number of copies of page data can be output at any user terminal connected to a computer network.

2. The book on-demand system according to the claim 1, wherein the step of generating the page data by the step of carrying out the layout on the basis of the layout information at the user terminal generates the page data through automatic edition processing based on the content and the layout information by automatic edition means equipped to the user terminal.

3. The book on-demand system according to claim 1 or 2, wherein the content database and the layout information database are mounted in different servers.

4. The book on-demand system according to any of claims 1 to 3, wherein the one or plural content servers can be set up on a computer network by unspecified persons by storing contents based on a data format containing data for carrying out the charging processing therein.

5. The book on-demand system according to any one of claims 1 to 4, wherein when the charging processing is carried out in accordance with output of the page data created, the content is decoded at the user terminal.

6. The book on-demand system according to any one of claims 1 to 5, wherein the content is a content that is encoded on the basis of a unique format so as to be decodable with a decode key.

7. The book on-demand system according to claim 6, wherein the content contains attribute information to control use of the content, and the control of restricting use of the content is released by using the decode key to decode the content.

8. The book on-demand system according to claim 6 or 7, wherein the content is subjected to decoding and charging by indicating one or plural use conditions of an output method, the size, resolution, copy number of a content to be output, and other conditions.

9. The book on-demand system according to any one of claims 6 to 8, wherein the content contains sample data of the content, content main body data, charging information on a counter value for use of the content, attribute information on control of the content use, and a unique ID for identifying the content.

10. The book on-demand system according to any one of claims 6 to 8, wherein the content contains sample data of the content, URL information indicating the location of the content main body, charging information on a counter value for use of the content, attribute information on control of the content use, and a unique ID for identifying the content.

11. The book on-demand system according to any one of claims 6 to 8, wherein the content contains sample data of the content, a content location ID for identifying the location of the content main body on a network, charging information on a counter value for use of the content, attribute information on control of the content use, and a unique ID for identifying the content.

12. The book on-demand system according to any one of claims 1 to 11, wherein the step of selecting a desired layout and selecting a desired content from the contents by the user is carried out by carrying out search and extraction processing based on a keyword or content ID from the contents stored in the content database and then carrying out the selection step.

13. The book on-demand system according to any one of claims 1 to 12, wherein the step of selecting a desired layout and selecting a desired content from the contents by the user is carried out by carrying out the processing of watching/listening to sample data of a content stored in the content database and then carrying out the selection step.

14. The book on-demand system according to any one of claims 1 to 13, wherein in the step of authenticating the user when charging processing is carried out in connection with the output of the page data created, authentication is carried out by using a hardware key equipped to the user terminal.

15. A content charging system according to claim 14, wherein a content output shop terminal supplied by a system manager side is connected to a computer network, and page data containing contents can be output from the content output shop terminal by equipping an authentication key by the user to the content output shop terminal.

16. The book on-demand system according to any one of claims 1 to 15, wherein data of a content comprising one or a combination of plurality of character information, image information, moving picture information, audio information, layout information and other information is contained in a content stored in the content server.

17. The book on-demand system according to any one of claims 1 to 15, wherein a content stored in the content server contains data of an image content which can be compressed or enlarged by using a three-dimensional vector indicating a vertical dimension, a horizontal dimension and brightness.
